# EUROPÄISCHE PATENTANMELDUNG

(11) **EP 1 724 867 A1**
(43) Veröffentlichungstag der Anmeldung: **22.11.2006**
(21) Anmeldenummer: 05010792.9
(22) Anmeldetag: 18.05.2005
(51) Int. Cl.: H01M 8/04

(54) **Verfahren zum Betrieb eines Brennstoffzellensystems sowie Brennstoffzellensystem**

(71) Anmelder: SIEMENS AKTIENGESELLSCHAFT, 80333 München (DE)
(72) Erfinder: Coerlin, Detlev, 91056 Erlangen (DE); Stühler, Walter, 96114 Hirschaid (DE); Voitlein, Ottmar, 91475 Lonnerstadt (DE)

(57) **Zusammenfassung**

Bei einem Verfahren zum Betrieb eines Brennstoffzellensystems (1) wird ein Prozessgas (O₂, H₂) vor der Zufuhr zu einer Anzahl von Brennstoffzellen (10) befeuchtet, dem Prozessgas (O₂, H₂) wird vor der Zufuhr zu den Brennstoffzellen (10) ein Prozessabgas (0₂', H₂') zugeführt und in Abhängigkeit von I-nertgasanteilen in dem Prozessgas (O₂, H₂) zumindest ein Teil des Abgases (0₂', H₂') aus den Brennstoffzellen (10) ausgetragen. Erfindungsgemäß erfolgt das Befeuchten des Prozessgases (O₂, H₂) durch einen Flüssigkeitsringverdichter (2, 2'), wobei das Prozessabgas (0₂', H₂') dem Prozessgas vor dem Befeuchten durch den Flüssigkeitsringverdichter (2, 2') zugeführt wird.

Die Erfindung ermöglicht den Betrieb eines Brennstoffzellensystems mit einem guten Prozessgasausnutzungsgrad und mit hoher Leistungsdynamik, wobei ein einfacher Aufbau und eine einfache Steuerung bzw. Regelung des Brennstoffzellensystems möglich ist. Ferner kann das Brennstoffzellensystem einfach und flexibel an unterschiedliche Größen der Brennstoffzellen und/oder eine unterschiedliche Anzahl von Brennstoffzellen angepasst werden.

## Beschreibung

Die Erfindung betrifft ein Verfahren zum Betrieb eines Brennstoffzellensystem gemäß Oberbegriff des Patentanspruchs 1 sowie ein Brennstoffzellensystem gemäß Oberbegriff des Patentanspruchs 9. Ein derartiges Verfahren bzw. ein derartiges Brennstoffzellensystem sind z.B. aus der EP 0596 366 B1 bekannt.

Beim Betrieb eines Brennstoffzellensystems wird üblicherweise einer Anzahl von Brennstoffzellen zur Erzeugung elektrischen Stroms sowohl anodenseitig als auch kathodenseitig jeweils ein Prozessgas zugeführt. Als anodenseitiges Prozessgas wird beispielsweise Wasserstoff und als kathodenseitiges Prozessgas Luft oder Sauerstoff verwendet. Üblicherweise sind mehrere aufeinander gestapelte Brennstoffzellen mit zugehörigen Anschluss- und Dichtungselementen zu einem Brennstoffzellenblock zusammengefasst. Ein Brennstoffzellensystem kann somit einen einzigen oder auch mehrere, ggf. miteinander verbundene, Brennstoffzellenblöcken umfassen.

Es gibt mittlerweile eine Vielzahl von unterschiedlichen Arten von Brennstoffzellensystemen, die sich im Hinblick auf ihren Aufbau und insbesondere im Hinblick auf die verwendeten Elektrolyte sowie im Hinblick auf die notwendige Betriebstemperatur unterscheiden. Bei einer so genannten PEM-Brennstoffzelle ist zwischen einer gasdurchlässigen Anode und einer gasdurchlässigen Kathode eine Polymermembran angeordnet, die für Wasserstoffprotonen durchlässig ist.

Für den Betrieb eines Brennstoffzellensystems bestehen oft vielfältigste Anforderungen:
Bei einer Vielzahl von Brennstoffzellentypen, insbesondere bei den vorgenannten PEM-Brennstoffzellen, müssen die Prozessgase vor der Zufuhr zu den Brennstoffzellen befeuchtet werden, um z.B. ein Austrocknen der Membran zu verhindern.

Wird ein Brennstoffzellensystem in einem hermetisch abgeschlossenen Raum betrieben, so soll das Brennstoffzellensystem möglichst geringe Mengen an Prozessabgasen produzieren.

Um die benötigten Prozessgasmengen möglichst klein zu halten, besteht eine Anforderung nach möglichst 100% Brennstoffausnutzung bei gleichzeitig gutem Wirkungsgrad.

In einigen Anwendungsfällen, insbesondere bei mobilen Brennstoffzellensystemen wie sie z.B. für Fahrzeuge verwendet werden, wird eine hohe Leistungsdynamik, d.h. ein schnelles Bereitstellen von Leistungsreserven gewünscht.

Bei einem Betrieb eines Brennstoffzellensystems, insbesondere beim Betrieb eines aus PEM-Brennstoffzellen gebildeten Blockes, besteht selbst bei einer anodenseitigen Versorgung mit technisch reinem Wasserstoff und bei einer kathodenseitigen Versorgung mit technisch reinem Sauerstoff das Problem, dass sich sowohl das infolge der elektrochemischen Reaktion von Wasserstoff und Sauerstoff in den Brennstoffzellen bildende Wasser als auch inerte Gase, wie z. B. Stickstoff, Kohlendioxid und Edelgase, in Strömungsrichtung der Gase durch den Brennstoffzellenblock aufkonzentrieren, was mit Wirkungsgradverlusten verbunden ist. Um derartige Wirkungsgradverluste zu vermeiden, werden Prozessabgase, die hohe Konzentrationen an Inertgasen und Wasser enthalten, aus dem Brennstoffzellenblock ausgetragen. Allerdings werden hierbei auch reaktionsfähige Prozessgasbestandteile aus dem Brennstoffzellenblock ausgetragen, wodurch der Grad der Brennstoffausnutzung sinkt bzw. die Abgasmenge steigt.

Aus der EP 0596 366 B1 ist ein Verfahren zum Betreiben eines Brennstoffzellensystems mit einem Brennstoffzellenblock bekannt, bei dem ein kathodenseitiges Prozessgas vor der Zufuhr zu dem Brennstoffzellenblock in einem Befeuchter befeuchtet wird. Der Brennstoffzellenblock besteht kathodenseitig aus einer ersten Gruppe von Brennstoffzellen, die parallel von dem Prozessgas durchströmt werden. Eingangsseitig parallel dazu schließt sich eine zweite Gruppe von Brennstoffzellen an. Das die erste Zellgruppe durchströmende Prozessgas wird teilweise über einen Wasserabscheider und einen Verdichter in die erste Zellgruppe rezirkuliert und andererseits teilweise in die zweite Zellgruppe eingeleitet. Durch Messung des elektrischen Stromes einer Brennstoffzelle wird der Inertgas- bzw. Wasseranteil in dem Prozessgas bestimmt und in Abhängigkeit davon zumindest ein Teil des Inertgases und Wassers aus dem Brennstoffzellenblock ausgetragen. Der Brennstoffzellenblock kann somit mit einem guten Brennstoffausnutzungsgrad und einem guten Wirkungsgrad betrieben werden. Das in dem kathodenseitigen Prozessgas entstehende Produktwasser wird hierbei in einem Wasserabscheider von dem rezirkulierenden Prozessabgas getrennt und in den Befeuchter geleitet.

Ausgehend hiervon ist es Aufgabe vorliegender Erfindung, ein Verfahren zum Betrieb eines Brennstoffzellensystems und ein für die Durchführung des Verfahrens geeignetes Brennstoffzellensystem anzugeben, die einen Betrieb des Brennstoffzellensystems mit einem guten Wirkungsgrad und mit hoher Leistungsdynamik ermöglichen sollen, wobei ein einfacher Aufbau und eine einfache Steuerung bzw. Regelung der Brennstoffzellensystems möglich sein soll. Ferner soll das Brennstoffzellensystem einfach und flexibel an unterschiedliche Größen der Brennstoffzellen und/oder eine unterschiedliche Anzahl von Brennstoffzellen anpassbar sein.

Die auf das Verfahren gerichtete Aufgabe wird gelöst durch ein Verfahren mit den Merkmalen des Patentanspruches 1. Die auf das Brennstoffzellensystem gerichtete Aufgabe wird gelöst durch ein Brennstoffzellensystem mit den Merkmalen des Patentanspruchs 9. Vorteilhafte Ausgestaltungen sind jeweils Gegenstand der Unteransprüche.

Mit Hilfe des Flüssigkeitsringverdichters kann das Prozessgas befeuchtet und über die Drehzahl des Flüssigkeitsringverdichters dessen Zufuhr zu den Brennstoffzellen genau eingestellt werden. Da das Prozessabgas dem Prozessgas vor dessen Befeuchtung durch den Flüssigkeitsringverdichter zugeführt wird, kann der Flüssigkeitsringverdichter auch gleichzeitig zur Ansaugung des Prozessabgases für dessen Zufuhr zum (frischen) Prozessgas verwendet werden.

Durch den Flüssigkeitsringverdichter wird somit sowohl die Funktion des Befeuchters und Verdichters bzw. Ansaugers für das Prozessgas als auch für das Prozessabgas übernommen, wodurch der Aufbau des Brennstoffzellensystem und auch die Steuerung und Regelung der Prozessgaszufuhr zu den Brennstoffzellen vereinfacht wird.

Eine Anpassung der Prozessgaszufuhr an die jeweilige Größe und/oder Anzahl der Brennstoffzellen ist auf einfache Wiese durch Anpassung der Drehzahl des Verdichters möglich. Das Brennstoffzellensystem kann somit weitgehend standardisiert werden und allein durch Anpassung der Drehzahl des Verdichters einfach und flexibel an unterschiedlich Anzahlen bzw. Größen von Brennstoffzellenblöcken angepasst werden.

Durch eine Drehzahlerhöhung des Verdichters kann innerhalb kurzer Zeit der Abgasstrom vergrößert und somit die Zuführung von Abgas zu dem Prozessgas vergrößert bzw. das Druckniveau in den Brennstoffzellen erhöht werden, wodurch eine hohe Dynamik bei der Leistungsabgabe möglich ist.

Zur Entfernung von Flüssigkeitsbestandteilen in dem Prozessgas wird dieses bevorzugt nach seiner Befeuchtung durch den Flüssigkeitsringverdichter durch einen Flüssigkeitsabscheider geführt.

Gemäß einer besonders vorteilhaften Ausgestaltung der Erfindung wird der Flüssigkeitsringverdichter mit Flüssigkeit aus dem Flüssigkeitsabscheider betrieben. Der Flüssigkeitsabscheider dient somit als Flüssigkeitsvorlage für den Flüssigkeitsringverdichter. Bei einem Stillstand des Flüssigkeitsringverdichters, z.B. aufgrund eines Defekts eines Antriebsmotors des Flüssigkeitsringverdichters, kommt es somit zu einem Stillstand beim Zufluss von Flüssigkeit zu dem Flüssigkeitsabscheider und somit auch zu einem Stillstand beim Zufluss von Betriebsmittel zu dem Flüssigkeitsringverdichter, wodurch ein Überfluten des Flüssigkeitsringverdichters und ein Austreten von Betriebsflüssigkeit aus einer Ansaugöffnung des Flüssigkeitsringverdichters vermieden werden kann.

Zur Abscheidung von Produktwasser aus dem Prozessabgas kann das Prozessabgas vor der Zufuhr zu dem Prozessgas ebenfalls durch einen Flüssigkeitsabscheider geführt werden. Hierdurch können Wirkungsgradverluste in den Brennstoffzellen vermieden werden.

Für die Nachspeisung aufgrund der Prozessgasbefeuchtung verbrauchter Flüssigkeit kann dem Flüssigkeitsabscheider gemäß einer vorteilhaften Ausgestaltung der Erfindung zusätzlich aus Prozessabgas des Brennstoffzellenblocks abgeschiedenes Produktwasser zugeführt werden.

Alternativ oder zusätzlich kann für die Nachspeisung der durch die Prozessgasbefeuchtung verbrauchten Flüssigkeit dem Flüssigkeitsabscheider zusätzlich eine Kühlflüssigkeit, z.B. aus einem Kühlflüssigkeitsbehälter des Brennstoffzellenblocks, zugeführt werden.

Der Inertgasanteil in dem Prozessgas kann auf einfache Weise durch Erfassung der Spannung einer oder mehrerer Brennstoffzellen ermittelt werden. Alternativ bzw. ergänzend kann der Inertgasanteil mit Hilfe von Gassensoren ermittelt werden.

Ein erfindungsgemäßes Brennstoffzellensystem umfasst eine Anzahl von Brennstoffzellen, ein Prozessgaszuführung zu Zuführung von Prozessgas zu den Brennstoffzellen, eine in die Prozessgaszuführung geschaltete Einrichtung zur Befeuchtung des

Prozessgases, eine Prozessabgasrückführung, durch die ein Prozessabgas dem Prozessgas vor dessen Zuführung zu den Brennstoffzellen zuführbar ist, und Mittel zum Austragen zumindest eines Teils des Prozessabgases aus dem Brennstoffzellensystem in Abhängigkeit von Inertgas- und/oder Wasseranteilen in dem Prozessgas. Die Einrichtung zur Befeuchtung des Prozessgases weist hierbei einen Flüssigkeitsringverdichter auf, wobei die Prozessabgasrückführung in Strömungsrichtung des Prozessgases vor dem Flüssigkeitsringverdichter in die Prozesszuführung mündet.

Die im Hinblick auf das erfindungsgemäße Verfahren angeführten Vorteile gelten sinngemäß auch für das erfindungsgemäße Brennstoffzellensystem.

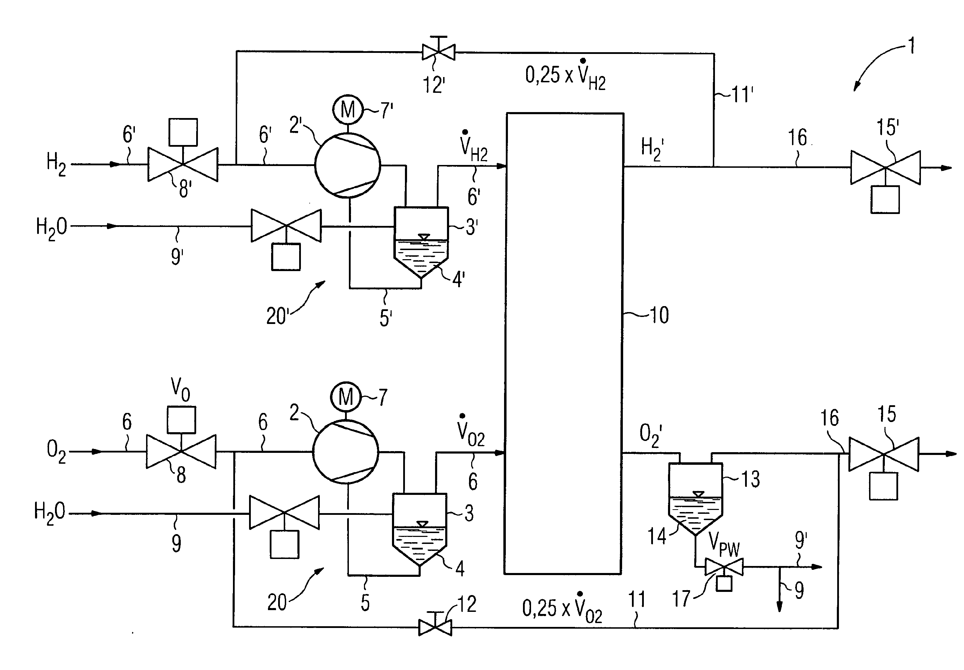

Die Erfindung sowie weitere vorteilhafte Ausgestaltungen der Erfindung gemäß Merkmalen der Unteransprüche werden im Folgenden anhand eines Ausführungsbeispieles in der Figur näher erläutert.

Die Figur zeigt ein Brennstoffzellensystem 1, das einen Brennstoffzellenblock 10 umfasst. Prozessgaszuführungen 6, 6' dienen zur Zufuhr von Prozessgasen zu dem Brennstoffzellenblock 10. Eine erste Prozessgaszuführung 6 dient zur Zuführung von Sauerstoff O₂ zu den Kathodenseiten und eine zweite Prozessgaszuführung 6' zur Zuführung von Wasserstoff H₂ zu den Anodenseiten der Brennstoffzellen des Brennstoffzellenblocks 10.

Über ein Stellventil 8 kann die Zufuhr (frischen) Sauerstoffs O₂ in die Prozessgaszuführung 6 eingestellt werden. In die Prozessgaszuführung 6 ist eine Einrichtung 20 zur Befeuchtung des Sauerstoffes O₂ vor dessen Zufuhr zu dem Brennstoffzellenblock 10 geschaltet. Die Einrichtung 20 weist einen Flüssigkeitsringverdichter 2 auf, durch den der Sauerstoff O₂ zugleich befeuchtet und verdichtet wird. Der Flüssigkeitsringverdichter 2 wird mit Wasser betrieben.

Weiterhin ist in die Prozessgaszuführung 6 zwischen den Flüssigkeitsringverdichter 2 und den Brennstoffzellenblock 10 ein Flüssigkeitsabscheider 2 zur Abscheidung von in dem Sauerstoff O₂ enthaltenen Wasserbestandteilen geschaltet. Das in dem Flüssigkeitsabscheider 3 abgeschiedene Wasser 4 wird zum Betrieb des Flüssigkeitsringverdichters 2 benutzt. Der Flüssigkeitsabscheider 3 ist hierzu über eine Leitung 5 mit dem Flüssigkeitsringverdichter 2 zur Zufuhr des abgeschiedenen Wassers 4 zu dem Flüssigkeitsringverdichter 2 verbunden.

Durch eine Prozessabgasrückführung 11 kann das kathodenseitige Prozessabgas, d.h. der den Brennstoffzellenblock 30 verlassende Sauerstoff O₂', dem Brennstoffzellenblock 10 eingangsseitig wieder zugeführt werden. Der Volumenstrom des zurückgeführten Sauerstoffs O₂' kann über ein Einstellventil 12 eingestellt werden und beträgt typischerweise 25% des dem Brennstoffzellenblocks 10 kathodenseitig über die Prozessgaszuführung 6 zugeführten Sauerstoffs O₂.

Der dem Brennstoffzellenblock zugeführte Volumenstrom an Sauerstoff O₂ ist derart eingestellt, dass die Brennstoffzellen mit einer ausreichend hohen Spülrate betrieben werden, so dass entstehendes Produktwasser, d.h. bei der elektrochemischen Reaktion in den Brennstoffzellen entstehendes Wasser, sicher aus den Brennstoffzellen entfernt und damit ein guter Wirkungsgrad der Brennstoffzellen gewährleistet werden kann. Die Spülrate ist hierbei das Verhältnis des Volumenstromes des den Brennstoffzellenblock 30 verlassenden Sauerstoffes O₂' zu dem Volumenstrom des dem Brennstoffzellenblock zugeführten Sauerstoffes O₂.

Das Produktwasser wird mit dem den Brennstoffzellenblock 10 verlassenden Sauerstoff 02' aus dem Brennstoffzellenblock 10 ausgetragen. Der den Brennstoffzellenblock 10 verlassende Sauerstoff 02' wird hierzu über einen Produktwasserabscheider 13 geführt, in dem das Produktwasser abgeschieden wird. Das abgeschiedene Produktwasser 14 kann anschließend über die Verbindungsleitungen 9, 9' und die Flüssigkeitsabscheider 3, 3' den Flüssigkeitsringverdichtern 2, 2' als Betriebsflüssigkeit zugeführt werden.

In dem im Kreislauf geführten Sauerstoff O₂ reichern sich mit zunehmender Betriebsdauer Inertgase, wodurch die Zellspannungen absinken. Durch Erfassung der Spannung einer oder mehrerer Zellen des Brennstoffzellenblocks 10 kann auf den Inertgasanteil in dem Sauerstoff O₂ geschlossen werden. Bei Rückgang dieser Spannung um einen bestimmten Betrag (z.B. auf 85 % bis 90 %) wird deshalb ein Teil des den Brennstoffzellenblock 10 verlassenden Sauerstoffes O₂' und damit auch die darin enthaltenen Inertgasanteile durch Öffnen des Ventils 15 über die Prozessabgasabführung 16 aus dem Kreislauf und somit aus dem Brennstoffzellenblock 10 bzw. dem Brennstoffzellensystem ausgebracht. Der ausgebrachte Sauerstoff O₂' wird über die Prozessgaszuführung 6 durch (frischen) Sauerstoff O₂ ersetzt.

In entsprechender Weise wird über die Prozessgaszuführung 6' dem Brennstoffzellenblock 10 anodenseitig Wasserstoff H₂ zugeführt, der in einem Flüssigkeitsringverdichter 2' verdichtet und befeuchtet und anschließend in einem Flüssigkeitsabscheider 3' von Wasserbestandteilen befreit wird. Der den Brennstoffzellenblock 10 verlassende Wasserstoff H₂' kann mittels einer Prozessabgasrückführungsleitung 11' wieder eingangsseitig des Brennstoffzellenblocks 10 dem Wasserstoff H₂ zugeführt werden. Die Rückführungsleitung 11' mündet hierzu vor dem Flüssigkeitsringverdichter 2' in die Prozessgaszuführung 6'. Der Volumenstrom des zurückgeführten Wasserstoffs H₂' kann über ein Einstellventil 12' eingestellt werden und beträgt typischerweise 25% des dem Brennstoffzellenblocks 10 über die Prozessgaszuführung 6' zugeführten Wasserstoffs H₂. Mittels des Flüssigkeitsringverdichters 2' erfolgt zugleich eine Ansaugung des den Brennstoffzellenblock 10 verlassenden Wasserstoffs H₂' und die Befeuchtung und Verdichtung des Wasserstoffs H₂ vor dessen Zufuhr zu dem Brennstoffzellenblock 10.

Die Produktwasserzufuhr zu den Flüssigkeitsabscheidern 3, 3' kann über ein Ventil 17 gesteuert werden. Bei einem Ausfall eines Flüssigkeitsringverdichters 2, 2' kann somit der Zufluss von Produktwasser in die Flüssigkeitsabscheider 3, 3' unterbunden werden, wodurch auch die Betriebsflüssigkeitszufuhr zu dem jeweiligen Flüssigkeitsringverdichter unterbunden und somit dessen Überschwemmung mit Betriebsflüssigkeit verhindert wird.

Zusätzlich oder alternativ zu der Zufuhr von Produktwasser kann den Flüssigkeitsabscheidern 3, 3' auch Kühlwasser aus einem nicht näher dargestellten Kühlwasserbehälter des Brennstoffzellenblocks 10 zugeführt und als zusätzliche Betriebsflüssigkeit für die Flüssigkeitsringverdichter 2, 2' verwendet werden. Die Verwendung von Kühlwasser als zusätzliche Betriebsflüssigkeit hat gegenüber Produktwasser den Vorteil, dass kein gelöster Sauerstoff in die Betriebsflüssigkeit des Flüssigkeitsringverdichters 2 für die Befeuchtung und Verdichtung des Wasserstoffs H₂ gelangen kann.

Ein jeder der Flüssigkeitsringverdichter 2, 2' dient sowohl zur Ansaugung eines Prozessabgases O₂', H₂', zur Befeuchtung und Verdichtung eines Prozessgases O₂, H₂ und zum Treiben des Prozessgases O₂, H₂ durch den Brennstoffzellenblock 10 und darüber hinaus in die jeweilige Prozessabgasrückführung 11, 11'. Hierdurch wird der Aufbau des Brennstoffzellensystems als auch die Steuerung und Regelung der Prozessgaszufuhr zu dem Brennstoffzellenblock 10 vereinfacht.

Durch Anpassung der Drehzahlen der Flüssigkeitsringverdichter 2, 2' ist es zudem sehr einfach, die Prozessgaszufuhren individuell an die jeweilige Größe des Brennstoffzellenblocks 10 anzupassen. Die Einrichtungen zur Prozessgaszu- und -abfuhr können somit standardisiert werden und über die Drehzahlen einfach und flexibel an Brennstoffzellenblöcke unterschiedlicher Leistungsklassen angepasst werden.

Durch eine Drehzahlveränderung der Flüssigkeitsringverdichter 2, 2' kann der Überschussgasstrom (d.h. der Anteil an über die Rückführungsleitung 11, 11' zur Prozessgaszuführung 6, 6' zurückgeführten Prozessabgases O₂', H₂') bzw. das Druckniveau in den Brennstoffzellen des Brennstoffzellenblocks 10 schnell verändert und somit eine hohe Leistungsdynamik des Brennstoffzellensystems 1 erzielt werden.

Durch die Kreislaufführung der Prozessgase O₂, H₂ ist eine gute Prozessgasausnutzung möglich. Reaktionsfähige Abgase können somit weitgehend vermieden werden. Die geringen, in den über die Prozessabgasabführungen 16, 16' aus dem jeweiligen Kreislauf bzw. dem Brennstoffzellenblock 10 ausgebrachten Prozessabgase O₂', H₂' enthaltenen reaktionsfähigen Gasbestandteile können entsprechend des in der noch unveröffentlichten Patentanmeldung mit amtlichem Aktenzeichen EP 04006126.9, auf die hier ausdrücklich Bezug genommen wird, beschriebenen Verfahrens in einem separaten Brennstoffzellenblock zusätzlich in Strom umgesetzt werden.

## Patentansprüche

1. Verfahren zum Betrieb eines Brennstoffzellensystems (1), wobei
- ein Prozessgas (O₂, H₂) vor der Zufuhr zu einer Anzahl von Brennstoffzellen (10) befeuchtet wird,
- dem Prozessgas (O₂, H₂) vor der Zufuhr zu den Brennstoffzellen (10) ein Prozessabgas (O₂', H₂') zugeführt wird und
- in Abhängigkeit von Inertgasanteilen in dem Prozessgas (O₂, H₂) zumindest ein Teil des Prozessabgases (O₂', H₂') aus dem Brennstoffzellensystem (1) ausgetragen wird,
**dadurch gekennzeichnet, dass** das Befeuchten des Prozessgases (O₂, H₂) durch einen Flüssigkeitsringverdichter (2, 2') erfolgt, wobei das Prozessabgas (O₂', H₂') dem Prozessgas (O₂, H₂) vor dem Befeuchten durch den Flüssigkeitsringverdichter (2, 2') zugeführt wird.

2. Verfahren nach Anspruch 1, wobei das Prozessgas (O₂, H₂) nach dem Befeuchten durch den Flüssigkeitsringverdichter (2, 2') durch einen Flüssigkeitsabscheider (3, 3') geführt wird.

3. Verfahren nach Anspruch 2, wobei der Flüssigkeitsringverdichter (2, 2') mit Flüssigkeit (4, 4') aus dem Flüssigkeitsabscheider (3, 3') betrieben wird.

4. Verfahren nach Anspruch 3, wobei dem Flüssigkeitsabscheider (3, 3') zusätzlich aus Prozessabgas (O₂', H₂') der Brennstoffzellen (10) abgeschiedene Flüssigkeit (14) zugeführt wird.

5. Verfahren nach Anspruch 3 oder 4, wobei dem Flüssigkeitsabscheider (3, 3') zusätzlich eine Kühlflüssigkeit (H₂O) der Brennstoffzellen (10) zugeführt wird.

6. Verfahren nach einem der vorhergehenden Ansprüche, wobei das Prozessabgas (O₂') vor der Zufuhr zu dem Prozessgas (O₂) durch einen Flüssigkeitsabscheider (14) geführt wird.

7. Verfahren nach einem der vorhergehenden Ansprüche, wobei der Inertgasanteil durch Erfassung der Spannung einer oder mehrerer Brennstoffzellen ermittelt wird.

8. Verfahren zum Betrieb eines Brennstoffzellensystems (1),
wobei
- einer Anzahl von Brennstoffzellen (10) kathoden- und anodenseitig jeweils ein Prozessgas (O₂ bzw. H₂) zugeführt wird
- jedes der Prozessgase (O₂ bzw. H₂) vor der Zufuhr zu den Brennstoffzellen (10) durch jeweils einen Flüssigkeitsringverdichter (3, 3') befeuchtet wird,
- dem Prozessgas (O₂ bzw. H₂) vor der Zufuhr zu dem Flüssigkeitsringverdichter (3 bzw. 3') ein Prozessabgas (O₂' bzw. H₂') zugeführt wird,
- in Abhängigkeit von Inertgasanteilen in dem Prozessgas (O₂, H₂) zumindest ein Teil des Prozessabgases (O₂', H₂') aus dem Brennstoffzellensystem (10) ausgetragen wird.

9. Brennstoffzellensystem (1) umfassend
- eine Anzahl von Brennstoffzellen (10),
- eine Prozessgaszuführung (6, 6') zur Zuführung von Prozessgas (O₂, H₂) zu den Brennstoffzellen (10),
- eine in die Prozessgaszuführung (6, 6') geschaltete Einrichtung (20, 20') zur Befeuchtung des Prozessgases (O₂, H₂),
- eine Prozessabgasrückführung (11, 11'), durch die ein Prozessabgas (O₂', H₂') dem Prozessgas (O₂, H₂) vor dessen Zuführung zu den Brennstoffzellen (10) zuführbar ist,
- Mittel (15, 16, 15', 16') zum Austragen zumindest eines Teils des Prozessabgases (O₂', H₂') aus den Brennstoffzellen (10) in Abhängigkeit von Inertgas- und/oder Wasseranteilen in dem Prozessgas (O₂, H₂), **dadurch gekennzeichnet, dass** die Einrichtung (20, 20') zur Befeuchtung des Prozessgases (O₂, H₂) einen Flüssigkeitsringverdichter (2, 2') aufweist,
wobei die Prozessabgasrückführung (11, 11') in Strömungsrichtung des Prozessgases (O₂, H₂) vor dem Flüssigkeitsringverdichter (2, 2') in die Prozessgaszuführung (6, 6') mündet.

10. Brennstoffzellensystem (1) nach Anspruch 9, wobei in die Prozessgaszuführung (6, 6') zwischen dem Flüssigkeitsringverdichter (2, 2') und die Brennstoffzellen (10) ein Flüssigkeitsabscheider (3, 3') zur Abscheidung von Flüssigkeit aus dem Prozessgas (O₂, H₂) geschaltet ist.

11. Brennstoffzellensystem (1) nach Anspruch 10, wobei der Flüssigkeitsabscheider (3, 3') mit dem Flüssigkeitsringverdichter (2, 2') zu dessen Versorgung mit Betriebsflüssigkeit verbunden ist.

12. Brennstoffzellensystem (1) nach Anspruch 9 oder 10, wobei der Flüssigkeitsabscheider (2, 2') mit einer Kühleinrichtung der Brennstoffzellen (30) zur Zufuhr von Kühlflüssigkeit (H₂O) in den Flüssigkeitsabscheider (3) verbunden ist.

13. Brennstoffzellensystem (1) nach einem der Ansprüche 9 bis 12, mit einem Produktwasserabscheider (13) zur Abscheidung von Produktwasser (14) aus einem Prozessabgas (O₂'), wobei der Produktwasserabscheider (13) mit dem Flüssigkeitsabscheider (3, 3') zur Zufuhr von Produktwasser (14) in den Flüssigkeitsabscheider (3, 3') verbunden ist.

14. Brennstoffzellensystem (1) umfassend
- eine Anzahl von Brennstoffzellen (10),
- eine erste Prozessgaszuführung (6, 6') zur Zuführung eines ersten Prozessgases (O₂) zu den Kathodenseiten und eine zweite Prozessgaszuführung (6') zur Zuführung eines zweiten Prozessgases (H₂) zu den Anodenseiten der Brennstoffzellen (10),
- Mittel (15, 16, 15', 16') zum Austragen zumindest eines Teils des jeweiligen Prozessabgases (O₂', H₂') aus dem Brennstoffzellensystem (1) in Abhängigkeit von Inertgasanteilen in dem Prozessgas (O₂, H₂),
- für jedes der Prozessgase (O₂, H₂) jeweils eine Prozessabgasrückführung (11, 11'), durch die ein Prozessabgas (O₂', H₂') dem Prozessgas (O₂, H₂) vor dessen Zuführung zu den Brennstoffzellen (10) zuführbar ist,
wobei in jede der Prozessgaszuführungen (6, 6') jeweils eine Einrichtung (20, 20') zur Befeuchtung des Prozessgases (O₂, H₂) geschaltet ist, die einen Flüssigkeitsringverdichter (2, 2') aufweist, und wobei die jeweilige Prozessabgasrückführung (11, 11') in Strömungsrichtung des Prozessgases (O₂, H₂) vor dem Flüssigkeitsringverdichter (2, 2') in die Prozessgaszuführung (6, 6') mündet.
